# EUROPÄISCHE PATENTSCHRIFT

(11) **EP 2 361 220 B1**
(45) Veröffentlichungstag und Bekanntmachung des Hinweises auf die Patenterteilung: **15.03.2017**
(21) Anmeldenummer: 09756736.6
(22) Anmeldetag: 20.11.2009
(51) Int. Cl.: C01B 32/05, C01B 32/20, C04B 35/52, C04B 35/528, C04B 35/532

(54) **SINTERFÄHIGES HALBKOKSPULVER MIT HOHER SCHÜTTDICHTE**
HIGH BULK DENSITY SINTERABLE SEMI-COKE
SEMI-COKE FRITTABLE AVEC UN HAUT POIDS VOLUMIQUE APPARENT

(30) Priorität: 28.11.2008 DE 102008059482
(43) Veröffentlichungstag der Anmeldung: 31.08.2011
(73) Patentinhaber: RÜTGERS Germany GmbH, 44579 Castrop-Rauxel (DE)
(72) Erfinder: GADOW, Rainer, 84544 Aschau am Inn (DE); KERN, Frank, 75233 Tiefenbronn (DE); BOENIGK, Winfried, 59348 Lüdinghausen (DE); LEVERING, Matthias, 45143 Essen (DE); BOLTERSDORF, Claudia, 58285 Gevelsberg (DE)
(74) Vertreter: Cohausz & Florack
(86) Internationale Anmeldenummer: PCT/EP2009/065538
(87) Internationale Veröffentlichungsnummer: WO 2010/060865

(56) Entgegenhaltungen:
- EP-A1- 0 281 636
- EP-A1- 0 308 824
- JP-A- 1 075 566
- JP-A- 1 103 910

## Beschreibung

### TECHNISCHES FELD, AUF DAS SICH DIE ERFINDUNG BEZIEHT

Die Erfindung betrifft ein sinterfähiges Halbkokspulver mit hoher Schüttdichte, ein kontinuierlich arbeitendes, schnelles Verfahren zu dessen Herstellung, dessen Verwendung zur Herstellung von Kohlenstoff- und Graphitkeramiken sowie einen Schlicker, der ein Zwischenprodukt im beanspruchten Verfahren ist.

### HINTERGRUND DER ERFINDUNG

Kohlenstoff- und Graphitkeramiken mit Korngrößen unter 20 µm werden in der Regel aus Zweikomponentensystemen mit einem Feststoff (Koks) und einem Bindemittel hergestellt. Zur Verbesserung des Eigenschaftsprofils sind Zusätze üblich, die den Verkokungsrückstand des Bindemittels erhöhen. Zweikomponentenwerkstoffe haben den prinzipiellen Nachteil, dass sich nach dem Abformen bei der Karbonisierung der verwendete Koks ausdehnt, während das sich verfestigende Bindemittelgerüst schrumpft. Erst wenn die Vorbehandlungstemperatur des Kokses überschritten wird, erfolgt ein Schrumpfen beider Bestandteile. Dieses prinzipielle Problem erklärt die Entstehung von Mikrorissen im Gefüge und die Begrenzung der mit derartiger Technik erreichbaren Festigkeiten in der fertigen Keramik.

Ein neuer Weg wurde durch die Verwendung von sinterfähigen Halbkoksen wie CARBOSINT^{®} beschritten, deren Herstellung in der EP 0 552 422 B1 beschrieben ist. Halbkoks ist ein Kohlenstoffmaterial, das ein Zwischenprodukt zwischen einem schmelzbaren Pech und einem unschmelzbaren Grünkoks ist. Er kann erhalten werden durch unvollständige Karbonisierung bei einer Temperatur zwischen Schmelzbeginn des Pechs und 500 °C gegebenfalls in Kombination mit einer Oxidation bei unter 250 °C. Optimal eingestellte Halbkokse wirken bei der Keramikerzeugung zugleich als Füllerkoks und Bindemittel. Durch die klebrige Oberfläche lässt sich ein solches Halbkokspulver ohne weitere Zusätze durch Gesenkpressen oder isostatische Pressen verarbeiten. Trotz der langen Verfügbarkeit der sinterfähigen Halbkokse und ihrer vorteilhaften Eigenschaftsprofile haben sich diese Einkomponentenwerkstoffe bisher im Markt aus den nachfolgend erläuterten Gründen nicht durchgesetzt.

Der Vorteil der Klebrigkeit des Kokses für dessen Kompaktierung bedeutet gleichzeitig, dass ein solches Material sich nur schlecht handhaben lässt, weil es zum Verklumpen und zum Anhaften in den Zuführungssystemen zu Pressautomaten oder beim Füllen von Formen neigt. Deshalb ist eine homogene Formfüllung erheblich erschwert und mit erheblichem Aufwand verbunden.

Ein weiterer Nachteil dieses Kokses ist die geringe Schüttdichte von etwa 0,4 g/cm³. Ein Bauteil auf Basis von Feinkornkohlenstoff hat in der Regel nach der Formgebung eine geometrische Dichte von 1,2 bis 1,3 g/cm³, was bedeutet, dass beim Gesenkpressen mindestens um Faktor drei verdichtet werden muss. Apparatetechnisch beherrscht wird eine Verdoppelung der Dichte. Höhere Verdichtungsfaktoren begrenzen - auch bei Mehrebenenaxialpressen - die Komplexität und Gestaltungsfreiheit der erzeugbaren Bauteile.

Bei der Herstellung von Bauteilen durch isostatisches Pressen erschwert die hohe Klebrigkeit des Kokses die homogene Befüllung der flexiblen Form. Aus Inhomogenitäten beim Befüllen resultierende Dichtegradienten im Bauteil lassen sich aber im weiteren Verarbeitungsprozess nicht mehr korrigieren.

Diese Nachteile verhindern bis heute viele Anwendungsmöglichkeiten, die eine endformnahe Formgebung erfordern. Die mechanische Nachbearbeitung ist meist zu teuer. Somit wird die volle Nutzung des im sinterfähigen Halbkoks vorhandenen Potentials bezüglich der Produkteigenschaften der technischen Kohlenstofferzeugnisse verhindert.

Zur Überwindung dieser Nachteile und damit zur Konfektionierung von sinterfähigem Halbkokspulver für die endformnahe Herstellung von Kohlenstoff- und Graphitkeramiken schlägt die US 4 985 184 vor, das Kohlenstoffpulver mit Binder in einem Anteil von 0,01 bis 5 Gew.% und einem nichtionischen Benetzungsmittel in einer Menge von 0,01 bis 3 Gew.%, jeweils bezogen auf die Masse des Feststoffs, zu suspendieren und anschließend durch Sprühtrocknung zu granulieren. Als Binder werden Methylcellulose oder Hydroxycellulose, als Benetzungsmittel Alkylphenolethylenoxide vorgeschlagen. Nachteilig an diesem Verfahren ist der geringe Feststoffgehalt der Suspension von nur 33 %, der eine hohe Wasserverdampfungsleistung bei der

Der "Abstact" der JP 01 075566 A1 beschreibt das Aufziehen eines Mesophase enthaltenden Pechs auf Graphitkohlenstoff. Zu diesem Zweck wird der Graphitkohlenstoff in einer Teerfraktion suspendiert und eine Aufschlemmung erhalten. Diese wird mit einem Lösemittel wie einer C₅₋₂₀ Fettsäure oder einem C₃₋₅ aliphatischen Keton bei einer Temperatur von 0 - 60°C versehen, so dass ein polyzyklisches aromatisches Polymer, das die Mesophasenvorstufe enthält, auf die Oberfläche des Graphitkohlenstoffs präzipitiert wird. Anschließend wird das Lösungsmittel entfernt und das Produkt gewaschen, um ein polyzyklisches aromatisches Polymergemisch zu erhalten. Schließlich erfolgt eine Wärmebehandlung in einer Inertgasatmosphäre bei 350-520°C.

Die EP 0 308 824 A1 beschreibt ein Verfahren zur Granulierung eines Kohlenstoffpulvers durch Sprühtrocknung einer das Kohlenstoffpulver, ein Bindemittel und ein Benetzungsmittel enthaltenden Aufschlemmung. Dadurch soll das Kohlenstoffpulver in einen Zustand versetzt werden, der dessen Eindringen in schmale oder komplizierte Formen erlaubt. Das Kohlenstoffpulver kann ein selbst sinterndes Pulver, wie Pech, sein. Es kann ggf. zusätzlich ein graphitreiches Pulver eingesetzt werden. Die Teilchen werden in Wasser in Gegenwart eines Bindemittels und eines Benetzungsmittels dispergiert. Es wird eine hohe Konzentration des Kohlenstoffkörpers angestrebt. 10-200 Gewichtsteile Pulver auf 100 Gewichtsteile Wasser sollen eingesetzt werden. Mit einem geeigneten Benetzungsmittel sollen auch 300 Gewichtsteile Pulver auf 100 Gewichtsteile Wasser möglich sein.

Die JP 01 103910 A1 beschreibt die Herstellung einer Aufschlämmung durch Dispergierung eines selbstsinternden Kohlenstoffpulvers und wenigstens eines anderen Kohlenstoffkörpers wie Graphit, eines Bindemittels und eines nicht ionischen Tensids als Benetzungsmittel in Wasser. Diese Aufschlämmung wird sprühgetrocknet, wobei ein Kohlenstoff mit einer mittleren Teilchengröße von 50 -500 µm erhalten wird.
- ein sinterfähiges Kohlenstoffpulver in Wasser unter Zusatz mindestens eines Binders und mindestens eines Verflüssigers dispergiert, wobei man den Kohlenstoffanteil der Dispersion auf mindestens 50 Ges.%, bezogen auf die Masse der Dispersion, und das Zetapotenzial der Dispersion auf mindestens -50mV einstellt und
- die Dispersion einer Homogenisierung durch kontinuierliche Nassmahlung mit einer Verweilzeit in der Mühle von weniger als 3 Minuten, vorzugsweise weniger als 2 Minuten, unterzieht.

Beschrieben wird ferner der durch Sprühtrocknung erhaltene Feststoff in Form eines Granulats.

Bei der Sprühtrocknung erfolgt in Folge eines schnellen Trocknungsvorgangs zerstäubter Tröpfchen der Dispersion eine Agglomeration der Primärteilchen zu wesentlich größeren rieselfähigen Sekundärpartikeln. Die nach Sprühtrocknung erhaltenen Feststoffteilchen besitzen einen Schüttwinkel von 18° bis 23°, vorzugsweise 18,5° bis 22,5°, gemessen in Anlehnung an DIN 53468. Das nicht granulierte Material weist Schüttwinkel von 41° auf. Der d₅₀-Wert der Korngrößenverteilung des sprühgranulierten Produkts wurde mit einem Laserbeugungs-spektrometer der Firma Malvern (Mastersizer 2000) bestimmt und beträgt 60 bis 100 µm. Das bedeutet 50 Gew.% der Kohlenstoffteilchen haben nach der Sprühtrocknung einen Durchmesser von 60 bis 100 µm. Dabei handelt es sich um die Sekundärteilchengröße.

Beschrieben wird schließlich die Verwendung der sprühgetrockneten Kohlenstoffteilchen zur Herstellung von Kohlenstoff- und Graphitkeramik.

Gelöst wird diese Aufgabe durch ein kontinuierlich durchführbares Verfahren, in dem man
- ein sinterfähiges Kohlenstoffpulver (Halbkoks) in Wasser unter Zusatz mindestens eines Binders und mindestens eines Verflüssigers dispergiert, wobei man den Kohlenstoffanteil der Dispersion auf mindestens 50 Gew.%, bezogen auf die Masse der Dispersion, und das Zetapotential der Dispersion auf weniger als -50 mV einstellt,
- die Dispersion einer Homogenisierung durch kontinuierliche Nassmahlung mit einer Verweilzeit in der Mühle von weniger als 3 Minuten, vorzugsweise weniger als 2 Minuten, unterzieht und
- die homogene Suspension sprühtrocknet.

Gegenstand der Erfindung ist ferner die Dispersion (Schlicker), die mindestens 50 Gew.-% Halbkokspulver, 0,5 bis 2 Gew.-% Binder und 0,5 bis 5 Gew.% Verflüssiger, wobei sich die Gewichtsprozentangaben des Binder- und des Verflüssigeranteils auf die Masse des Feststoffs der Dispersion beziehen, und erhältlich ist, in dem man ein sinterfähiges Kohlenstoffpulver (Halbkoks) in Wasser unter Zusatz des Binders und mindestens eines Verflüssigers dispergiert und wobei man den Kohlenstoffanteil der Dispersion auf mindestens 50 Gew.%, bezogen auf die Masse der Dispersion, und das Zetapotential der Dispersion auf weniger als -50 mV einstellt und die Dispersion einer Homogenisierung und Stabilisierung durch kontinuierliche Nassmahlung mit einer Verweilzeit in der Mühle von weniger als 3 Minuten unterzieht.

Gegenstand der Erfindung ist ferner der durch Sprühtrocknung erhaltene Feststoff in Form eines Granulats.

Bei der Sprühtrocknung erfolgt in Folge eines schnellen Trocknungsvorgangs zerstäubter Tröpfchen der Dispersion eine Agglomeration der Primärteilchen zu wesentlich größeren rieselfähigen Sekundärpartikeln. Die nach Sprühtrocknung erhaltenen Feststoffteilchen besitzen einen Schüttwinkel von 18° bis 23°, vorzugsweise 18,5° bis 22,5°, gemessen in Anlehnung an DIN 53468. Das nicht granulierte Material weist Schüttwinkel von 41° auf. Der d₅₀-Wert der Korngrößenverteilung des sprühgranulierten Produkts wurde mit einem Laserbeugungs-spektrometer der Firma Malvern (Mastersizer 2000) bestimmt und beträgt 60 bis 100 µm. Das bedeutet 50 Gew.% der Kohlenstoffteilchen haben nach der Sprühtrocknung einen Durchmesser von 60 bis 100 µm. Dabei handelt es sich um die Sekundärteilchengröße.

Gegenstand der Erfindung ist schließlich die Verwendung der sprühgetrockneten Kohlenstoffteilchen zur Herstellung von Kohlenstoff- und Graphitkeramik.

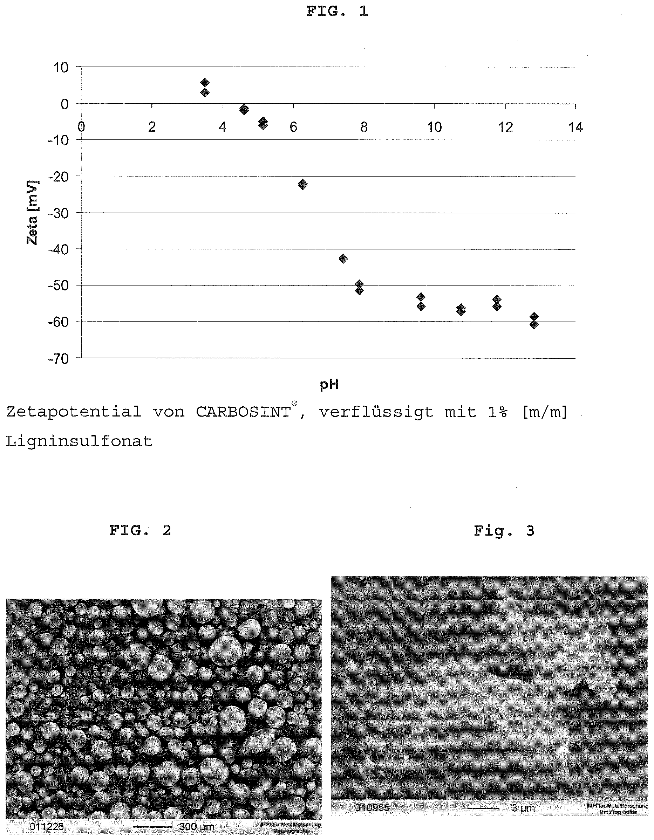

Durch das kombinierte Verfahren aus kontinuierlicher Nassdispergierung mit kurzen Verweilzeiten in der Mühle und Sprühgranulierung wird ein sinterfähiges Halbkokspulver, bespielsweise das CARBOSINT^{®}-Pulver gemäß EP 0 552 422 B1, in seiner Handhabbarkeit verbessert. Es werden nahezu ideal runde, fehlerfreie Granalien erhalten (Fig.2). Führt man die Sprühgranulierung ohne vorherige Nassdispergierung durch, so kommt es zur starken Sedimentation des Feststoffs im Vorlagegefäß der Sprühtrocknung trotz Zugabe von Additiven und zu Verstopfungen der Sprühdüse. Auch die Biegebruchfestigkeiten erfindungsgemäß erhaltener Prüfkörper sind deutlich höher als diejenigen der US 4 985 184 mit 65 MPa.

### BESCHREIBUNG DER BEVOZUGTEN AUSFÜHRUNGFORMEN DER ERFINDUNG

- Fig. 1: zeigt die Abhängigkeit des Zetapotentials der Halbkoksteilchen vom pH-Wert der Suspension.
- Fig. 2: zeigt eine rasterelektroskopische Aufnahme eines erfindungsgemäß behandelten Halbkokses.
- Fig. 3: zeigt eine rasterelektroskopische Aufnahme von CARBOSINT^{®}.
- Fig. 4: zeigt die Schütt/Stampfdichte des erfindungsgemäßen Produkts als Funktion des Feststoffgehalts.
- Fig. 5: zeigt Schütt-/Stampfdichte als Funktion der Fördermenge durch den Sprühturm bei einem Feststoffgehalt des Schlickers von 55,8 % m/m
- Fig. 6: zeigt die Dichte von Presskörpern in Abhängigkeit vom Feststoffgehalt des Schlickers.
- Fig. 7: zeigt die Dichte von gesinterten Presskörpern in Abhängigkeit vom Feststoffgehalt des Schlickers.
- Fig. 8: zeigt die Dichte in Abhängigkeit von der Fördermenge in der Sprühtrocknung bei gegebener Schlickerzusammensetzung und Verdampfungsleistung.
- Fig. 9: zeigt die Dichte eines bei einer Temperatur von bis zu 1.100 °C gebrannten Presskörpers in Abhängigkeit von der Fördermenge in der Sprühtrocknung.

Ausgangsmaterial für das erfindungsgemäße Verfahren sind sinterfähige Kohlenstoffpulver (Halbkokse). Die Herstellung eines solchen Halbkokspulvers ist in der EP 0 552 422 B1 beschrieben, auf deren Offenbarung für die Zwecke dieser Erfindung Bezug genommen wird. Ein solches Kohlenstoffpulver wird hergestellt durch Destillation eines bituminösen Materials, wie steinkohlenteerstämmige oder aromatisch mineralölstämmige Teere oder Peche, bei einem Druck von bis zu 5 mbar und einer Endtemperatur von mindestens 400 °C, Trockenmahlung des Destillationsrückstands auf die gewünschte Partikelgröße und Oxidation des gemahlenen Destillationsrückstands bei Temperaturen unterhalb der Temperatur beginnender Pulverbackung, bis auch der Kern der einzelnen Partikel nicht mehr schmilzt.
Das sinterfähige Halbkokspulver wird in Wasser dispergiert (Schlicker). Der Anteil des Halbkokspulvers in der Dispersion wird auf vorzugsweise 55 bis 59 Gew.%, bezogen auf die Masse der Dispersion, eingestellt. Die Höhe des Feststoffanteils in der Dispersion, wird abhängig sein von der Weiterverarbeitbarkeit durch Sprühtrocknung. Ist die Feststoffkonzentration zu hoch, ist keine stabile Sprühtrocknung möglich. Im Allgemeinen wird der Anteil jedoch so hoch eingestellt werden, dass die erhaltene Dispersion durch Sprühtrocknung weiter verarbeitet werden kann.

Als Additive zur Dispergierung können Verflüssiger und Bindemittel eingesetzt werden. Als Verflüssiger werden vorzugsweise alkali- und erdalkalifreie oberflächenaktive Substanzen wie die kommerziell erhältlichen Substanzen Dolapix^{®} CA, Dolapix^{®} ET 85, Trusan^{®} 450, 470, 480 und 490 sowie Ligninsulfonat und ein mit Formaldehyd hergestelltes Polymer der Naphthalinsulfonsäure (NSF) eingesetzt. Besonders bevorzugt ist gegenüber Naturprodukten mit wechselnden Zusammensetzungen synthetisch hergestelltes NSF wegen seiner reproduzierbaren Molekulargewichtsverteilung. Der Anteil des Verflüssigers, bezogen auf die Masse des Feststoffs, kann 0,5 bis 5 Gew.% betragen.

Geeignete Bindemittel umfassen Polyethylenglykole mit Molmassen von 500 bis 20.000 g/mol, vorzugsweise 2.000 bis 6.000 g/mol, sowie Polyvinylalkohole. Ein geeigneter Polyvinylalkohol ist beispielsweise PVA 4-88. Der Anteil des Bindemittels kann, bezogen auf die Masse des Feststoffs, 0,5 bis 2,5%, vorzugsweise 1 bis 2 Gew.%, betragen.

Zum Erhalt der gewünschten Stabilität des Schlickers wird das Zetapotential auf weniger als -45 mV, vorzugsweise etwa -50 mV eingestellt. Der pH-Wert des Schlickers wird auf mindestens 7, vorzugsweise 8 bis 12, eingestellt.

Um die gewünschte Stabilität des Schlickers sicherzustellen, kann die Schlickerdispersion in einem nachfolgenden Schritt in einer kontinuierlich im Durchfluss betriebenen Kugelmühle nass gemahlen werden. Dabei erfolgt eine Deagglomeration der Teilchen bei gleichzeitiger Benetzung der einzelnen Teilchen durch die wässrige Phase. Die Deagglomeration kann auch durch Behandlung der Dispersion mit Ultraschall unterstützt werden.

Überraschenderweise kann die Verweilzeit in der Kugelmühle sehr kurz gehalten werden. Dies verhindert eine wesentliche Änderung der Korngrößenverteilung. Die Mühle wirkt überwiegend als Dispergator mit hohem Energieeintrag.

Die sich dem Dispergier-/Mahlvorgang anschließende Sprühtrocknung ist ein kontinuierlich durchführbares Verfahren zur Trocknung von Lösungen, Suspensionen, pastösen Massen. Mittels einer Düse (durch Flüssigkeitsdruck oder Pressluft oder Inertgas betrieben) oder rotierenden Zerstäuberscheiben (4.000-50.000 U/min) wird das zu trocknende Gut in einem Heißluftstrom (Temperaturen je nach Apparatur bis zu 300°C) zu Tröpfchen zerstäubt, wobei es während seines Falls durch den Sprühturm zu einem feinen Granulat mit sphärischer Form trocknet. Die Heißluft kann je nach Bauart oder Verwendungszweck im Gleichstrom oder im Gegenstrom zu dem Sprühstrahl strömen. Das anfallende Trockengut wird meist durch einen Zyklonabscheider vom Luftstrom getrennt und kann dort entnommen werden. Die durch die Sprühtrocknung/-granulierung erhaltenen Teilchen sind rieselfähig und besitzen eine Größenverteilung d50 von 60 bis 100 µm.

Die Schüttdichte des erfindungsgemäß erhaltenen Sprühgranulats beträgt 0,5 bis 0,6 g/cm³; die Stampfdichte beträgt etwa 0,6 g/cm³.

Die folgenden Beispiele dienen der weiteren Erläuterung der Erfindung.

### Beispiele

### Beispiel 1 - Herstellung des sinterfähigen Halbkokspulvers

Ein Steinkohlenteerpech mit einem Erweichungspunkt (Mettler) von 50°C, einem Gehalt von Chinolinunlöslichem (QI) gemäß DIN 51921 von 13,2 Gew.% und einem Gehalt an Toluolunlöslichem (TI) gemäß DIN 51906 von 32,7 Gew.% wird in einem Rührwerksverdampfer bei einem Druck von 1 mbar bis 460°C destilliert. Der Destillationsrückstand hat einen Fließpunkt (Tottoli) von 350°C und enthält 57,4 Gew.% QI, 91,9 Gew.% TI und 10,9 Gew.% flüchtige Bestandteile. Er wird in einer Schwingmühle trocken bis auf eine mittlere Korngröße von 30 µm gemahlen. Das Pulver beginnt bei etwa 280°C zu verbacken. Es wird eine Oxidationstemperatur von nur 180°C gewählt, um ein Verbacken des Pulvers auch bei der zu erwartenden exothermen Reaktion mit Sicherheit auszuschließen.

Ein Teil des gemahlenen Rückstands wird in Gegenwart von Luft bei 180°C oxidiert und dabei im Abstand von einer Stunde jeweils eine Probe genommen. Die Proben werden mit 30 MPa zu Probekörpern gepresst, die unter Inertgas in einem Kammerofen mit einem Temperaturgradienten von 1 K/min bis auf 1.000°C erhitzt werden.

Nach einer Oxidationszeit von 10 Stunden tritt kein Blähen der Probe mehr auf. Die erforderliche Oxidationszeit beträgt daher 10 Stunden, um das Pulver bis in den Kern der einzelnen Partikel unschmelzbar zu machen. Der Rest des gemahlenen Rückstands wird daher bei 180°C 10 Stunden in Luft oxidiert. Das oxidierte Pulver hat einen Erweichungsbeginn von 250°C, einen Sauerstoffgehalt von 2,9 Gew.% und eine optische Anisotropie von 15 Vol.%.

Es enthält 70,9 Gew.% QI, 94,5 Gew.% TI und 0,1 Gew.% flüchtige Bestandteile.

### Beispiel 2 - Herstellung der Kohlenstoffdispersion (Schlicker)

Die Zusammensetzung von 18 Versuchsproben ist in der Tabelle 4 gezeigt.

Zur Herstellung des Schlickers werden 3.000 g CARBOSINT^{®}, 2.375 g entionisiertes Wasser, 60 g NSF als Verflüssiger und 60 g Binder (PEG 4000) im Rührreaktor angesetzt. Der Feststoff mit einer Teilchengrößenverteilung d₅₀ von 8 bis 9 µm wird langsam zugegeben, um eine möglichst gleichmäßige Mischung zu erzielen. Nach einer Dispergierdauer von 1 h wird der pH-Wert mit 25%iger Ammoniaklösung auf pH 10 eingestellt und weitere 24 h homogenisiert. Anschließend erfolgt eine Feindispergierung (Homogenisierung) in einer Perlmühle vom Typ Dyno_Mill^{®} KDL Pilot der Willy A. Bachofen (WAB) AG. Die Mahlkugeln bestehen aus mit Cer stabilisiertem Zirkonoxid und haben einen Durchmesser von 1,2 bis 1,7 mm. Die Mühle wird bis zu einem Füllgrad von 85 % mit Mahlkugeln gefüllt. Die Umfangsgeschwindigkeit der Rührscheiben beträgt 10 m/s. Der mittels Verdrängerpumpe durch die Mühle zu pumpende Volumenstrom beträgt 700 mL/min. Die Verweilzeit in der Perlmühle beträgt 50 bis 80 Sekunden. Nach Passieren der Perlmühle wird die Suspension in den auf Trocknungstemperatur temperierten Sprühturm gepumpt.

### Beispiel 3 - Sprühtrocknung

Der in Beispiel 2 erhaltene Schlicker wird sprühgetrocknet mit einem im Gleichstrom betriebenen Sprühturm der Firma Nubilosa vom Typ LTC. Bei diesem Sprühturm handelt es sich um einen Technikumsprühturm für eine Wasserverdampfungsleistung von maximal 7,5 kg/h bei einer maximalen Trocknungslufttemperatur von 350 °C. Der Elektrolufterhitzer besitzt eine Heizleistung von 12 kW. Der zylindrische Teil des Turms ist 4 m lang und hat einen Durchmesser von 800 mm. Am oberen Ende des Sprühturms wird die zu trocknende wässrige Dispersion über eine außen mischende Zweistoffdüse eines Durchmessers von 1,5 bis 2 mm in den Trocknungsraum eingebracht. Zur Zerstäubung wird ein Pressluftverbrauch von etwa 3 Nm³/h bei einem Pressluftüberdruck von 3 bar benötigt. Am unteren Ende des Trocknungsturms befinden sich ein Zyklon und ein Jet-Filter zur Abtrennung des Feinanteils aus dem Trocknungsluftstrom. Das Produkt wird am tiefsten Punkt der Apparatur aufgefangen. Es wurden Suspensionsdurchsätze von 2 bis 8 L/h bei Trocknungsgastemperaturen von 180 bis 275 °C gefahren.

Die Bedingungen der Sprühgranulierung für 18 Versuchsdurchläufe sind in der Tabelle 5 gezeigt.

### Beispiel 4 - Untersuchung der Schütt- und Stampfdichte

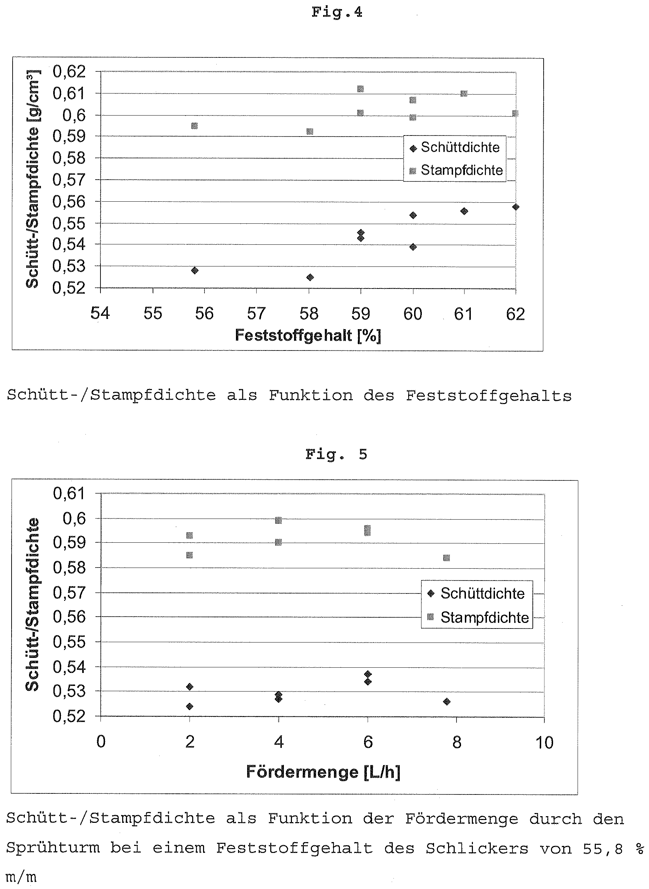

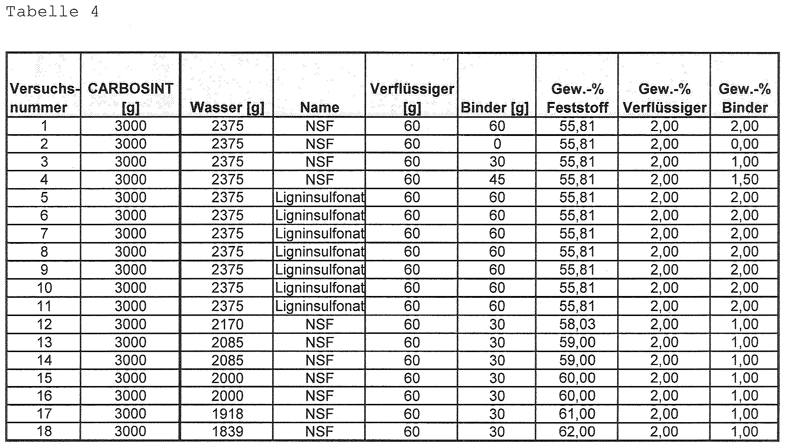

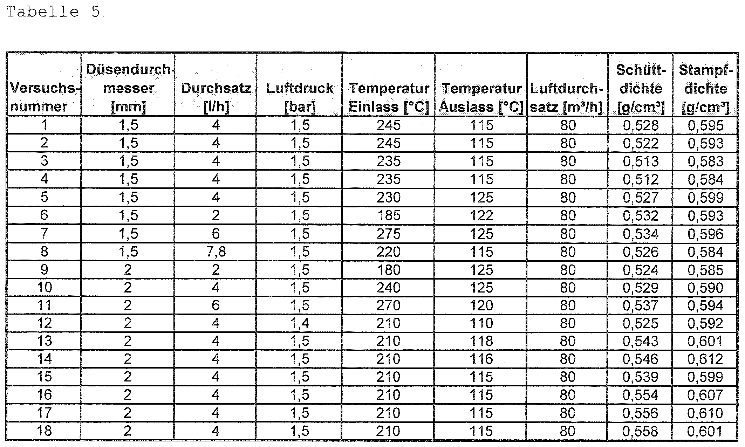

Ermittelt wurden Schüttdichte nach DIN 51705.und Stampfdichte (Stampfdichte) nach DIN 51916. Die erreichbaren Schütt- und Stampfdichten steigen mit steigendem Feststoffgehalt (Fig.4) und durchlaufen ein Maximum mit steigender Fördermenge (Fig.5) durch den Sprühturm. Die ermittelten Schüttdichten betragen 0,5 bis 0,6 g/cm³. Bei der Stampfdichte nach DIN 51916 erzielt man Werte von maximal 0,61 g/cm³.

Die Untersuchungen, deren Ergebnisse in den Figuren 4 und 5 dargestellt sind, zeigen, dass die Dichten der Formkörper mit steigendem Feststoffgehalt oder steigender Fördermenge durch den Sprühturm sinken.

Da neben der Verarbeitbarkeit in Pressen, wo eine hohe Schüttdichte gefordert wird, auch die Eigenschaften der Bauteile optimiert werden müssen, kann es vorteilhaft sein, den Feststoffgehalt nicht über 58 Gew.% und nicht unter 56 Gew.% einzustellen, jeweils bezogen auf die Masse des Schlickers.

### Beispiel 5 - Dichte des Presskörpers

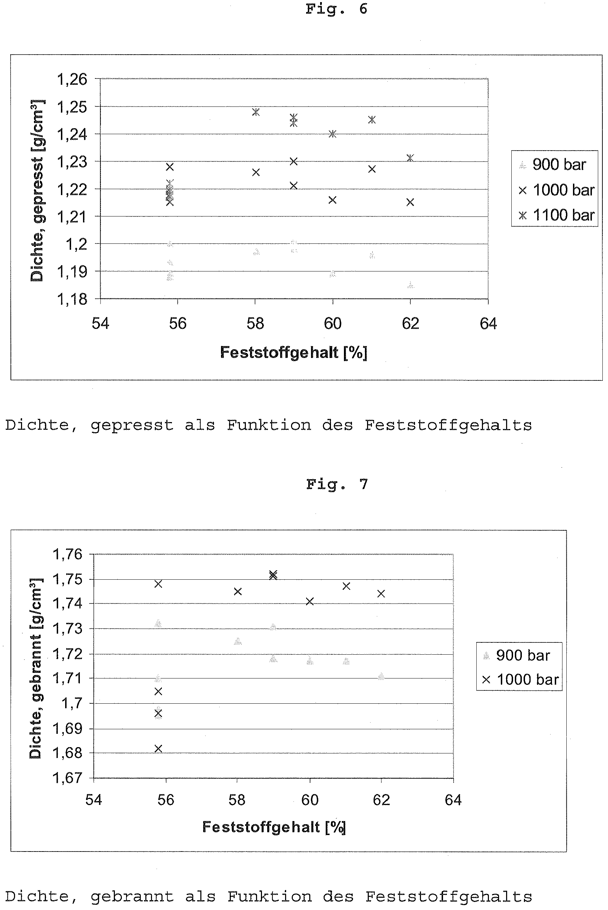

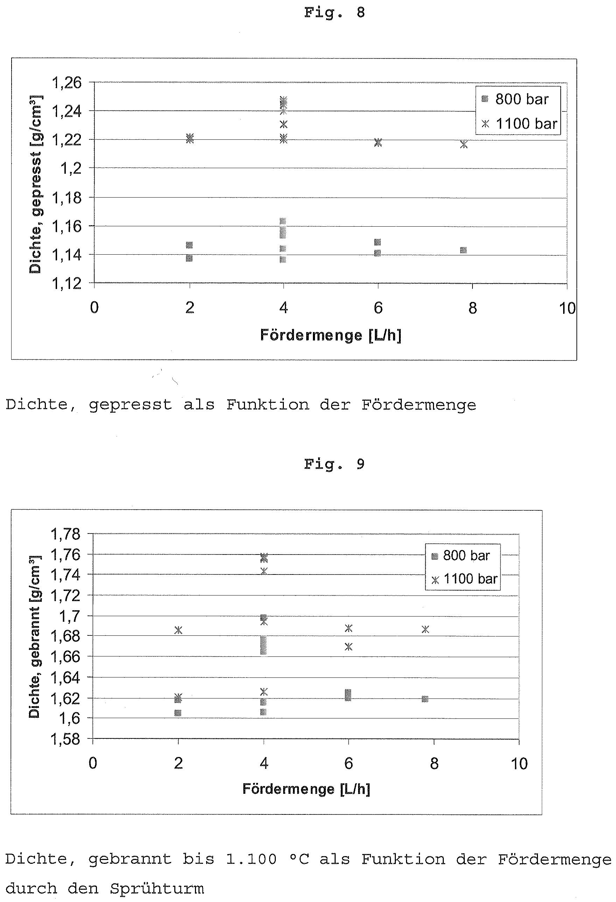

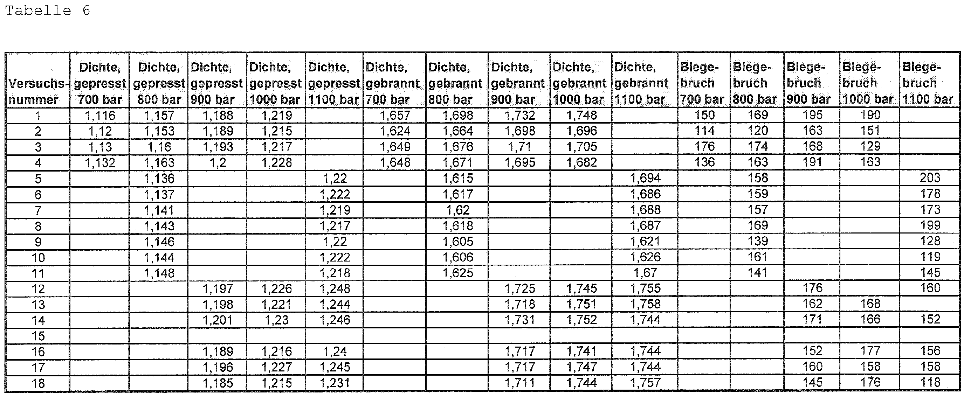

Bei der Weiterverarbeitung des Pulvers (Sprühgranulats) in Pressen wird das Pulver zu Formkörpern gepresst und anschließend gebrannt. Entscheidende Merkmale für gepresste oder gebrannte Körper sind die erzielten Dichten nach dem Pressen oder Brennen und die Biegebruchfestigkeit nach dem Brand. Es wurden daher die Dichten des verpressten oder gebrannten Formkörpers in Abhängigkeit vom Feststoffgehalt und von der Fördermenge bestimmt. Die Ergebnisse sind graphisch in den Figuren 6, 7, 8 und 9 dargestellt.

Die Biegebruchfestigkeiten wurden in Anlehnung an DIN 51902 bestimmt. Sie lagen nach Verpressen der Prüfkörper mit einem Pressdruck von 1100 bar bei max. 200 MPa. Ohne die Sprühgranulierung werden nur Biegebruchfestigkeiten von 180 MPa erhalten.

Eine Übersicht über die erhaltenen Messwerte ist in der Tabelle 3 gezeigt.

### Beispiel 6 - Vergleich von kontinuierlicher Dispergierung mit Batch-Dispergierung

Der Vorteil des kombinierten Verfahrens mit kontinuierlicher Dispergierung in einer Perlmühle mit < 1 min Verweilzeit und anschließender Sprühtrocknung gegenüber der zweistündigen-Batch-Dispergierung in einer Trommelmühle mit ebenfalls anschließender Sprühgranulierung liegt in den noch besseren Stoffwerten der erhaltenen Produkte. Höhere Schütt- und Stampfdichten führen dazu, dass die Granulate besser weiterverarbeitet werden können, weil sie ein besseres Formfüllverhalten aufweisen als Pulver mit geringer Schüttdichte. Dies erkennt man an den Biegebruchfestigkeiten der Presslinge nach der Carbonisierung, die ebenfalls gesteigert werden. Die Messergebnisse sind in der folgenden Tabelle 4 gezeigt. Außerdem ist der kontinuierliche Betrieb wegen der höheren Raum/Zeitausbeute wirtschaftlicher. Zudem ist der kontinuierliche Betrieb besser automatisierbar.

**Tabelle 1**

| Dispergierung | | kontinuierlich | Batch |
|---|---|---|---|
| Schüttdichte | [g/cm³] | 0,532 | 0,520 |
| Stampfdichte | [g/cm³] | 0,593 | 0,576 |
| gepresste Dichte, 800 bar | [g/cm³] | 1,137 | 1,188 |
| Dichte, gebrannt 1.100°C | [g/cm³] | 1,617 | 1,636 |
| Biegebruchfestigkeit | [MPa] | 159 | 124 |

### Beispiel 7 - Vergleich der verwendeten Verflüssiger

Es wurde untersucht, wie sich die Verflüssiger NSF und Ligninsulfonat auf die Produkteigenschaften auswirken. Durch Verwendung von NSF als Verflüssiger können die erhaltenen Kennwerte von Sprühgranulat und daraus erzeugtem Formkörper gegenüber dem Einsatz von Ligninsulfonat noch verbessert werden. Die Ergebnisse sind in der Tabelle 2 gezeigt.

**Tabelle 2**

| Verflüssiger | | Ligninsulfonat | NSF |
|---|---|---|---|
| Schüttdichte | [g/cm³] | 0,527 | 0,528 |
| Stampfdichte | [g/cm³] | 0,599 | 0,595 |
| Dichte, gepresst 800 bar | [g/cm³] | 1,136 | 1,157 |
| Dichte, gebrannt 1100 °C | [g/cm³] | 1,615 | 1,698 |
| Biegebruchfestigkeit | [MPa] | 158 | 169 |

### Beispiel 8 - Binder

Es wurde der Einfluss des Binders auf die erfindungsgemäß erhaltenen Produkte untersucht. Durch Sprühgranulierung ohne Binderzugabe können vergleichbare Stoffwerte der Produkte erzielt werden wie mit Binderzugabe. Die Ergebnisse sind in der folgenden Tabelle 3 gezeigt.

**Tabelle 3: Einfluss des Binders auf die Materialeigenschaften**

| Pressd ruck | | | mit Binder | ohne Binder | Nullprobe ohne Granulierung |
|---|---|---|---|---|---|
| 800 bar | ρ_{gepresst} | [g/cm³] | 1,161 | 1,162 | 1,178 |
| | ρ_{gebrannt 1100 °C} | [g/cm³] | 1,693 | 1,697 | 1,629 |
| | Biegebruch | [MPa] | 158 | 186 | 162 |
| | SEW | [*µ*O/m] | 39,11 | 37,35 | 44,23 |
| 900 bar | ρ_{gepresst} | [g/cm³] | 1,197 | 1,194 | 1,210 |
| | ρ_{gebrannt 1100 °C} | [g/cm³] | 1,716 | 1,715 | 1,667 |
| | Biegebruch | [MPa] | 166 | 160 | 173 |
| | SEW | [*µ*O/m] | 36,98 | 36,94 | 40,73 |
| | Schüttdichte | [g/cm³] | 0,531 | 0,498 | 0,400 |
| | Stampfdichte | [g/cm³] | 0,592 | 0,563 | 0,565 |

### Beispiel 9 - Schüttwinkel

Der Schüttwinkel wurde in Anlehnung an DIN 53468 bestimmt. Zur Bestimmung wurden 60 g Probematerial aus einem Trichter D_{oben} = 140 mm und Dᵤₙₜₑₙ = 10 mm, Höhe = 140 mm geschüttet und der sich bildende Kegel vermessen, wobei D für Durchmesser steht.

Es ergibt sich ein Schüttwinkel des sprühgranulierten Materials von 18,9 bis 22,1° und des CARBOSINT^{®}- Ausgangsmaterials von etwa 41°.

### Beispiel 10 - Korngrößenverteilung

Gemessen wurden die Korngrößen mittels Laserbeugungsspektrometrie und der d₅₀-Wert der Korngrößenverteilung bestimmt. Die Ergebnisse sind nachfolgend dargestellt.
CARBOSINT^{®}-Ausgangsmaterial: d₅₀ = 7-8 µm
CARBOSINT^{®}-Granulat: d₅₀ = 60-100 µm

## Patentansprüche

1. Kontinuierlich durchführbares Verfahren zur Herstellung eines Halbkokspulvers mit hoher Schüttdichte und Fließfähigkeit, **dadurch gekennzeichnet, dass** man ein sinterfähiges Kohlenstoffpulver (Halbkoks) in Wasser unter Zusatz mindestens eines Binders und mindestens eines Verflüssigers dispergiert, wobei man den Kohlenstoffanteil der Dispersion auf mindestens 50 Gew.-%, bezogen auf die Masse der Dispersion, und das Zetapotential der Dispersion auf weniger als -50 mV einstellt,
die Dispersion einer Homogenisierung und Stabilisierung durch kontinuierliche Nassmahlung mit einer Verweilzeit in der Mühle von weniger als 3 Minuten unterzieht und
die homogene Dispersion sprühtrocknet.

2. Verfahren nach Anspruch 1, **dadurch gekennzeichnet, dass** man als Verflüssiger ein mit Formaldehyd hergestelltes Polymer der Naphthalinsulfonsäure und als Binder PEG 2.000 bis 12.000 verwendet.

3. Verfahren nach Anspruch 1 oder 2, **dadurch gekennzeichnet, dass** man die Nassmahlung kontinuierlich in einer Kugelmühle durchführt.

4. Verfahren nach einem der Ansprüche 1 bis 3, **dadurch gekennzeichnet, dass** man den pH-Wert der Dispersion auf mindestens 7 einstellt.

5. Verfahren nach einem der Ansprüche 1 bis 4, **dadurch gekennzeichnet, dass** das durch Sprühtrocknung erhaltene Halbkokspulver eine Schüttdichte nach DIN 51705 von mindestens 0,52 g/cm³ und einer Stampfdichte nach DIN 51916 von mindestens 0,59 g/cm³ aufweist.

6. Verfahren nach einem der Ansprüche 1 bis 5, **dadurch gekennzeichnet, dass** das durch Sprühtrocknung erhaltene Halbkokspulver eine Teilchengröße d₅₀ von 60 bis 100 µm aufweist.

7. Wässrige Dispersion, enthaltend mindestens 50 Gew.-% Halbkokspulver, 0,5 bis 2 Gew.-% Binder und 0,5 bis 5 Gew.-% Verflüssiger, wobei sich die Gewichtsprozentangaben des Binder- und des Verflüssigeranteils auf die Masse des Feststoffs der Dispersion beziehen, wobei man ein sinterfähiges Kohlenstoffpulver (Halbkoks) in Wasser unter Zusatz des Binders und mindestens eines Verflüssigers dispergiert und wobei man den Kohlenstoffanteil der Dispersion auf mindestens 50 Gew.- %, bezogen auf die Masse der Dispersion, und das Zetapotential der Dispersion auf weniger als -50 mV einstellt und
die Dispersion einer Homogenisierung und Stabilisierung durch kontinuierliche Nassmahlung mit einer Verweilzeit in der Mühle von weniger als 3 Minuten unterzieht.

## Claims

1. Continuous method for production of a semicoke powder with high bulk density and flowability, **characterised in that**
a sinterable carbon powder (semicoke) is dispersed in water with addition of at least one binder and at least one liquefier, wherein the proportion of carbon in the dispersion is adjusted to at least 50 wt.%, relative to the mass of the dispersion, and the zeta potential of the dispersion is adjusted to less than -50 mV,
the dispersion is submitted to homogenisation and stabilisation by continuous wet grinding with a residence time in the mill of less than 3 minutes and
the homogeneous dispersion is spray-dried.

2. Method according to Claim 1, **characterised in that** a polymer of naphthalene sulphonic acid produced with formaldehyde is used as liquefier and PEG 2000 to 12 000 is used as binder.

3. Method according to Claim 1 or 2, **characterised in that** the wet grinding is carried out continuously in a ball mill.

4. Method according to one of Claims 1 to 3, **characterised in that** the pH of the dispersion is adjusted to at least 7.

5. Method according to any one of claims 1 to 4, **characterized in that** the semicoke powder obtained by spray drying has a bulk density according to DIN 51705 of at least 0.52 g/cm³ and a tamped density according to DIN 51916 of at least 0.59 g/cm³.

6. Method according to any one of claims 1 to 5, **characterized in that** the semicoke powder obtained by spray drying has a particle size d₅₀ of 60 to 100 µm.

7. Aqueous dispersion, containing at least 50 wt.% semicoke powder, 0.5 to 2 wt.% binder and 0.5 to 5 wt.% liquefier, where the percentages by weight of the binder and liquefier are relative to the mass of the solid matter of the dispersion whereby
a sinterable carbon powder (semicoke) is dispersed in water with addition of at least one binder and at least one liquefier, wherein the proportion of carbon in the dispersion is adjusted to at least 50 wt.%, relative to the mass of the dispersion, and the zeta potential of the dispersion is adjusted to less than -50 mV, and
the dispersion is submitted to homogenisation and stabilisation by continuous wet grinding with a residence time in the mill of less than 3 minutes.

## Revendications

1. Procédé exécutable en continu pour la production d'une poudre de semi-coke qui est dotée d'une densité apparente et d'une fluidité élevées,
**caractérisé en ce que** l'on disperse, dans l'eau, une poudre de carbone (semi-coke) frittable, tout en ajoutant au moins un liant et au moins un liquéfiant, sachant que l'on règle la part de carbone de la dispersion à au moins 50 % en poids par rapport à la masse de la dispersion et le potentiel zéta de la dispersion à moins de -50 mV,
q u e la dispersion est soumise à une homogénéisation et à une stabilisation par broyage humide en continu, avec un temps de séjour dans le broyeur inférieur à 3 minutes et
q u e la dispersion homogène est séchée par pulvérisation.

2. Procédé selon la revendication 1,
**caractérisé en ce que**, comme liquéfiant, on utilise un polymère de l'acide naphtosulfonique, fabriqué avec du formaldéhyde, et, comme liant, du PEG de 2.000 à 12.000.

3. Procédé selon revendication 1 ou 2,
**caractérisé en ce que** le broyage humide en continu est exécuté dans un broyeur à boulets.

4. Procédé selon l'une des revendications 1 à 3,
**caractérisé en ce que** la valeur pH de la dispersion est réglée à au moins 7.

5. Procédé selon l'une des revendications 1 à 4,
**caractérisé en ce que** la poudre de semi-coke, obtenue par séchage par pulvérisation, présente une densité apparente selon DIN 51705 d'au moins 0,52 g / cm³ et une densité de produit tassé selon DIN 51916 d'au moins 0,59 g / cm³.

6. Procédé selon l'une des revendications 1 à 5,
**caractérisé en ce que** la poudre de semi-coke, obtenue par séchage par pulvérisation, présente une grosseur de particule d₅₀ de 60 à 100 µm.

7. Solution aqueuse comprenant au moins 50 % en poids de poudre de semi-coke, 0,5 à 2 % en poids de liant et 0,5 à 5 % en poids de liquéfiant, sachant que les données des pourcentages en poids du liant et du liquéfiant se rapportent à la masse de substance solide de la dispersion, sachant que l'on disperse, dans l'eau, une poudre de carbone (semi-coke) frittable, tout en ajoutant au moins le liant et au moins un liquéfiant, et sachant que l'on règle la part de carbone de la dispersion à au moins 50 % en poids par rapport à la masse de la dispersion et le potentiel zéta de la dispersion à moins de -50 mV, et
q u e la dispersion est soumise à une homogénéisation et à une stabilisation par broyage humide en continu, avec un temps de séjour dans le broyeur inférieur à 3 minutes.
